# EUROPEAN PATENT APPLICATION

(11) **EP 4 404 044 A1**
(43) Date of publication of application: **24.07.2024**
(21) Application number: 24151311.8
(22) Date of filing: 11.01.2024
(51) Int. Cl.: G06F 3/06, G06F 11/14

(54) **DISTRIBUTING OBJECTS ACROSS DEDUPLICATION DOMAINS BASED ON A STORAGE DISTRIBUTION MODE**

(30) Priority: 17.01.2023 US 202318097889
(71) Applicant: Cohesity, Inc., San Jose, CA 95110 (US)
(72) Inventor: GUPTA, Apurv, San Jose, 95110 (US); BAJAJ, Rupesh, San Jose, 95110 (US)
(74) Representative: EIP

(57) **Abstract**

A plurality of objects sharing one or more common attributes are identified. A storage distribution mode for the identified objects sharing the one or more common attributes is determined based at least in part on one or more optimization criteria. The storage distribution mode is caused to be implemented by one or more of a plurality of storage clusters.

## Description

### BACKGROUND OF THE INVENTION

A source system stores data associated with a plurality of objects (e.g., object metadata, object content data). A storage cluster may perform a backup of the plurality of objects. There are many considerations to make when backing up the plurality of objects. For example, it may be desirable to deduplicate data when backing up data to make more efficient use of available storage space on the storage cluster. Deduplication of the data associated with the plurality of objects may be limited because the objects may not share substantial amounts of data. As a result, the storage cluster may require additional storage to perform a backup of the source system as the number of objects stored on the source cluster increases.

It may also be desirable to ensure that data is stored in a way that it can be restored quickly. However, the rate at which the storage cluster is able to perform a restore operation may be limited due to an input/output (I/O) bandwidth associated with the storage cluster. As a result, the storage cluster may not be able to satisfy a recovery time objective (RTO) associated with the source system.

### BRIEF DESCRIPTION OF THE DRAWINGS

Various embodiments of the invention are disclosed in the following detailed description and the accompanying drawings.
FIG. 1 is a block diagram illustrating an embodiment of a system for distributing objects across deduplication domains based on a storage distribution mode in accordance with some embodiments.
FIG. 2 is a flow diagram illustrating an embodiment of a process for distributing objects across deduplication domains based on a storage distribution mode in accordance with some embodiments.
FIG. 3 is a flow diagram illustrating an embodiment of a process for causing a storage distribution mode to be implemented in accordance with some embodiments.
FIG. 4 is a flow diagram illustrating an embodiment of a process for restoring a plurality of objects having one or more common attributes in accordance with some embodiments.
FIG. 5 is a flow diagram illustrating an embodiment of a process for dynamically switching between a deduplication distribution mode and a restore distribution mode in accordance with some embodiments.
FIG. 6 is a flow diagram illustrating an embodiment of a process for dynamically switching between a restore distribution mode and a deduplication distribution mode in accordance with some embodiments.
FIG. 7 is a flow diagram illustrating an embodiment of a process for dynamically switching between a restore distribution mode and a deduplication distribution mode in accordance with some embodiments.

### DETAILED DESCRIPTION

A technique to distribute data objects across deduplication domains based on a storage distribution mode is disclosed. Although the technique is described with respect to backup, the technique disclosed herein may be applicable whenever a data management operation (e.g., backup, migration, replication, archive, etc.) is performed for a cohort of data that is provided from a first system to a second system. A source system may be coupled to a plurality of different deduplication domains that are located at different locations. A deduplication domain may be storage wherein deduplication can be performed. Each storage cluster may correspond to a deduplication domain, and each storage cluster may comprise one or more storage nodes. In some embodiments, a storage cluster is located in the same datacenter as the source system. In some embodiments, a storage cluster is located in a datacenter remote from the source system. In some embodiments, a storage cluster is located in a cloud storage remote from the source system. The storage clusters are associated with a storage provider. The storage provider provides a data cluster management service that may be accessible via a cloud service system. The data cluster management service may configure via the cloud service system a storage cluster of the plurality of storage clusters to perform a data management operation.

Whenever a data management operation is performed at a plurality of deduplication domains, there are several considerations to make. For instance, storing data at one deduplication domain (e.g. one storage cluster) enables deduplication to be performed on the data more efficiently because more redundant data can be removed. However, this may have an impact on the speed at which the data can be restored to the source system. In contrast, storing data across two or more deduplication domains (e.g. two or more storage clusters) may reduce the efficiency of deduplication across both or all deduplication domains because deduplication may only be performed within a single deduplication domain. On the other hand, storing data across two or more deduplication domains improves how quickly the data can be restored to the source system because the two or more storage clusters can restore the data in parallel.

The techniques described herein allow a system to prioritize deduplication or restoration speed by dynamically selecting an optimal storage distribution mode in which to store (e.g. backup) data. The techniques described herein may also be used to optimize a balance between deduplication and restoration speed. For instance, dynamically selecting a storage distribution mode may enable a desired deduplication efficiency to be maintained at a deduplication domain while reducing the amount of time needed to restore the data to a source system. This is because the one or more other deduplication domains in combination with the deduplication domain may be used to restore, in parallel, the data.

In an example in which a user desires to backup some data, the user may register the source system to the above-described data cluster management service. The user may also identify a plurality of data objects (or simply objects from hereon) associated with the source system that are to be backed up, or protected. This may be achieved by providing a data protection specification to the data cluster management service. The data protection specification may register the source system with the data cluster management system and identify a plurality of objects associated with the source system that are to be protected.

The plurality of objects associated with the source system may be grouped into one or more groups. The data cluster management service may group the plurality of data objects associated with the source system, and may do so in response to receiving the data protection specification. In some embodiments, the plurality of objects associated with the source system may be grouped into a single group based on one or more common data attributes. For example, the plurality of objects may all be the same type of object (e.g., virtual machine). The one or more common data attributes (or simply attributes from hereon) may include a source system, a type of object, a size of an object, an application (e.g., Office 365, SQL) associated with an object, a retention policy associated with an object, a creation date associated with an object, a tag associated with an object, a permissions group associated with an object, an RTO associated with an object, a label associated with an object, a prefix associated with an object, an author associated with an object, a geolocation associated with an object, a creator associated with an object, etc. In some embodiments, the plurality of objects associated with the source system may be grouped into a plurality of different groups based on one or more common attributes. Each group is associated with a corresponding set of one or more common attributes. For example, the plurality of objects associated with the source system may be grouped into a first group that includes emails associated with a first department (e.g., engineering) of an entity associated with the source system (e.g., business, institution, enterprise, government, corporation, etc.), a second group that includes emails associated with a second department (e.g., sales) of the entity associated with the source system, ..., and an nth group that includes emails associated with an nth department (e.g., marketing) of the entity associated with the source system. In another example, the plurality of objects associated with the source system may be grouped into a first group that includes emails, a second group that includes word processing documents, a third group that includes spreadsheets, a fourth group that includes slideshow presentations, a fifth group that includes photos and videos, etc.

The data cluster management service may dynamically select, or determine, a storage distribution mode for a group of objects having one or more common attributes based on one or more optimization criteria. Depending on the storage distribution mode that is determined, the group of objects will be stored at one of: i) one storage cluster of a plurality of storage clusters and ii) two or more storage clusters of a plurality of storage clusters. In other words, the storage distribution mode defines how the group of objects are to be distributed across one or more storage clusters. The one or more optimization criteria may include one of more of parameter values or metrics, metadata and user-specific policies. Examples of parameter values or metrics include an expected deduplication efficiency, a predicted deduplication efficiency, a target deduplication ratio, an RTO, a recovery point objective (RPO), a cluster performance metric (e.g., CPU utilization, storage space available, storage space used), etc. Examples of metadata include a cluster type and a tag etc. Examples of user-specific policies include a retention policy and a parallel restoration requirement etc. The storage distribution mode for the group of objects may be selected using one or more of the following: a machine learning model, a rules-based model, and a heuristic model.

In some embodiments, the data cluster management service may dynamically select, or determine, the storage distribution mode for the group of objects having one or more common attributes to be a deduplication distribution mode. In the deduplication distribution mode, the objects having one or more common attributes included in the group may be stored at a single storage cluster. For example, a first object included in the group is stored at a first cluster, a second object included in the group is stored at the first cluster, ..., and a nth object included in the group is stored at the first cluster. A deduplication distribution mode enables deduplication within a storage cluster thereby improving deduplication efficiency. The deduplication distribution mode may be useful to select when it is desirable to prioritize deduplication. Deduplication distribution mode may be selected when the deduplication ratio for objects having one or more common attributes included in the group is expected to meet or exceed a particular deduplication ratio threshold. A deduplication ratio is a measurement of data's original size versus the data's size after removing redundancy. The single storage cluster may be selected from a plurality of storage clusters based on one or more factors, such as available storage space associated with a storage cluster, processing power associated with a storage cluster, network capabilities associated with a storage cluster, location of a storage cluster, etc.

In some embodiments, the data cluster management service may dynamically select, or determine, the storage distribution mode for the group of objects having one or more common attributes to be a restore distribution mode. In the restore distribution mode, the objects having one or more common attributes included in the group may be stored across a plurality of different clusters. For example, a first object included in the group may be stored at a first cluster, a second object included in the group may be stored at a second cluster, ..., and a nth object included in the group may be stored at an nth cluster. A single storage cluster may not be able to achieve a particular RTO because of I/O bandwidth limitations. Restore distribution mode may be selected when a particular RTO is to be satisfied for the plurality of objects included in the group. The particular RTO may be established by a user associated with the source system. In some embodiments, the particular RTO is a default RTO.

One or more of a plurality of storage clusters are caused to store (e.g. backup) the group of objects according to the selected storage distribution mode. The data cluster management service may cause the storage distribution mode to be implemented by one or more of the plurality of storage clusters. For the deduplication distribution mode, the data cluster management service may provide, to one of the storage clusters, a command to back up the plurality of objects having one or more common attributes included in the group. For the restore distribution mode, the data cluster management service may provide, to at least two of the plurality of clusters, a corresponding command to back up the plurality of objects having one or more common attributes included in the group. For example, the data cluster management service may provide to a first storage cluster a first command to back up a first subset of the plurality of objects included in the group and provide to a second storage cluster a command to back up a second subset of the plurality of objects included in the group.

In response to receiving the command, a storage cluster may configure itself to back up the plurality of objects having one or more common attributes included in the group. For example, a storage cluster is configured to request from the source system the data associated with the plurality of objects (e.g., metadata, data contents) in the group having the one or more common attributes. The storage cluster may be configured to request the data associated with the plurality of objects in the group having the one or more common attributes according to a backup schedule (e.g., daily, weekly, etc.). In response to the request, the source system provides the data associated with the requested objects. The storage cluster may store the data associated with the requested objects and may provide the data cluster management service a notification that indicates a storage location for the plurality of objects having the one or more common attributes included in the group stored by the storage cluster. In response to receiving the notification, the data cluster management service may update a map that indicates a storage location for the plurality of objects associated with the source system.

In some embodiments, the data cluster management service may monitor an amount of data stored by a first storage cluster and determines that the amount of data stored by the first storage cluster has reached a storage threshold. In response to such a determination, the data cluster management service may determine from a plurality of available storage clusters a second storage cluster having an amount of storage used that has not reached the storage threshold by a threshold amount. A storage cluster may be an available storage cluster in the event an amount of storage used by the storage cluster is less than the storage threshold by a threshold amount. The data cluster management service may cause a second storage cluster to implement the storage distribution mode implemented by the first storage cluster that has reached the storage threshold. For example, the first storage cluster that has reached the storage threshold may be implementing a deduplication distribution mode and the data cluster management service causes the second storage cluster to implement the deduplication distribution mode for the group of objects having the one or more common attributes. Alternatively, the first storage cluster that has reached the storage threshold may be implementing a restore distribution mode and the data cluster management service may cause the second storage cluster to implement the restore distribution mode for the group of objects having the one or more common attributes.

In some embodiments, the data cluster management service may selectively switch a storage cluster between a deduplication distribution mode and a restore distribution mode. In some embodiments, the storage cluster may switch from the deduplication distribution mode to the restore distribution mode. For example, the data cluster management service may monitor a deduplication ratio associated with a storage cluster that is in a deduplication distribution mode. The data cluster management service may determine whether the deduplication ratio associated with the storage cluster is greater than a threshold deduplication ratio by a threshold amount. In response to a determination that the deduplication ratio associated with the storage cluster is greater than the threshold deduplication ratio by the threshold amount, the data cluster management service may configure the storage cluster to switch from the deduplication distribution mode to the restore distribution mode by configuring the storage cluster to back up one or more objects having a second set of one or more attributes that are different than objects having a first set of one or more attributes that are currently stored by the storage cluster. One or more other storage clusters may be configured to back up the one or more objects having the second set of one or more attributes (either in restore distribution mode or deduplication distribution mode).

Switching from the deduplication distribution mode to the restore distribution mode may enable a particular deduplication ratio to be maintained at the storage cluster while reducing the amount of time needed to restore to a source system a plurality of objects having the second set of attributes because the one or more other storage clusters in combination with the storage cluster may restore, in parallel, the objects having the second set of attributes. In some embodiments, the data cluster management service may configure one or more other storage clusters in a restore distribution mode to back up objects having the first set of one or more attributes. This may reduce the amount of time needed to restore, to a source system, a plurality of objects having the first set of attributes because the one or more other storage clusters in combination with the storage cluster may restore, in parallel, the objects having the first set of attributes. In some embodiments, the data cluster management service may determine to maintain the storage cluster in the deduplication distribution mode in response to a determination that the deduplication ratio associated with the storage cluster is not greater than the threshold deduplication ratio by the threshold amount. In some embodiments, the data cluster management service may determine to revert the storage cluster back from the restore distribution mode to the deduplication distribution mode in response to a determination that the deduplication ratio associated with the storage cluster is not greater than the threshold deduplication ratio by the threshold amount.

In some embodiments, the storage cluster can switch from the restore distribution mode to the deduplication distribution mode. The data cluster management service may determine whether the deduplication ratio associated with the storage cluster is less than a threshold deduplication ratio by a threshold amount. In response to a determination that the deduplication ratio associated with the storage cluster is less than the threshold deduplication ratio by the threshold amount, the data cluster management service may configure the storage cluster to switch from the restore distribution mode to a deduplication distribution mode. This may postpone the need to add additional storage for the source system because the usage rate for storage space of the storage cluster is reduced since more data associated with source system is likely to be deduplicated by the storage cluster. The data cluster management service may configure the storage cluster to back up from the source system one or more objects having one or more common attributes. In some embodiments, the one or more objects having one or more common attributes are a subset of objects stored by the storage cluster. In some embodiments, the one or more objects having one or more common attributes are not currently stored by the storage cluster. In some embodiments, the data cluster management service may determine to maintain the storage cluster in the restore distribution mode in response to a determination that the deduplication ratio associated with the storage cluster is not less than the threshold deduplication ratio by the threshold amount. In some embodiments, the data cluster management service may determine to revert the storage cluster back from the deduplication distribution mode to the restore distribution mode in response to a determination that the deduplication ratio associated with the storage cluster is not less than the threshold deduplication ratio by the threshold amount.

In some embodiments, the data cluster management service may receive a request to restore a plurality of objects having one or more common attributes to a target destination. The data cluster management service may identify one or more storage clusters storing the plurality of objects having the one or more common attributes by utilizing a map that stores the storage location for a plurality of objects associated with the source system. The data cluster management service may provide, to the one or more identified storage clusters, a command to restore the plurality of objects having one or more common attributes to the target destination. In some embodiments, the plurality of objects having one or more common attributes are restored from a single storage cluster. In some embodiments, the plurality of objects having one or more common attributes are restored, in parallel, from a plurality of storage clusters.

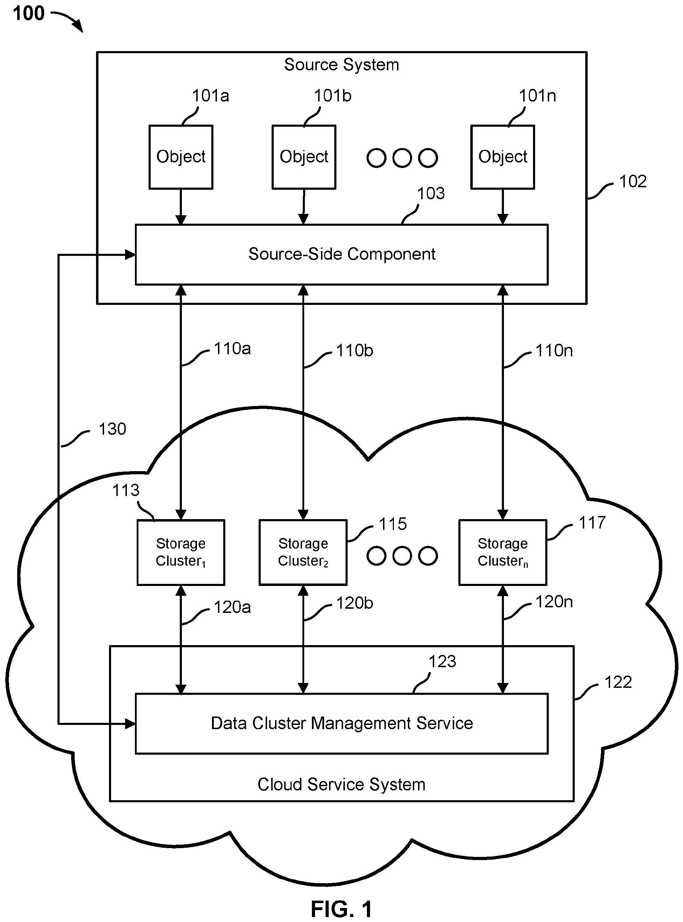

FIG. 1 is a block diagram illustrating an embodiment of a system for distributing objects across deduplication domains based on a storage distribution mode in accordance with some embodiments. In the example shown, system 100 includes a source system 102 coupled to storage clusters 113, 115, ..., 117 via connections 110a, 110b, ..., 110n, respectively. Storage cluster 113 may correspond to a first deduplication domain, storage cluster 115 may correspond to a second deduplication domain, ..., storage cluster 117 may correspond to an nth deduplication domain. A deduplication domain may be comprised of one or more storage devices storing data. Connections 110a, 110b, ..., 110n may be a wired or wireless connection. Connections 110a, 110b, ..., 110n may be a local area network (LAN), a storage area network (SAN), a wide area network (WAN), a wireless local area network (WLAN), a campus area network (CAN), the Internet, an intranet, a virtual private network (VPN), a metropolitan area network (MAN), a personal area network (PAN), and/or a combination thereof. Although FIG. 1 depicts source system 102 being coupled to three storage clusters, source system 102 may be coupled to n storage clusters. Although FIG. 1 depicts storage clusters 113, 115, ..., 117 being coupled to source system 102, storage clusters 113, 115, ..., 117 may be coupled to n source systems.

Storage clusters 113, 115, ..., 117 may be coupled to cloud service system 122 via connections 120a, 120b, ..., 120n, respectively. Connections 120a, 120b, ..., 120n may be a wired or wireless connection. Connections 120a, 120b, ..., 120n may be a LAN, a SAN, a WAN, a WLAN, a CAN, the Internet, an intranet, a VPN, a MAN, a PAN, and/or a combination thereof.

Storage clusters 113, 115, ..., 117 may be comprised of a corresponding set of storage nodes. In some embodiments, data stored by a storage node may be deduplicated. In some embodiments, data may be deduplicated across the storage nodes associated with a storage cluster.

In some embodiments, the storage nodes included in a storage cluster may be homogenous nodes where each storage node has the same capabilities (e.g., processing, storage, memory, etc.). In some embodiments, at least one of the storage nodes included in the storage cluster may be a heterogeneous node with different capabilities (e.g., processing, storage, memory, etc.) than the other storage nodes included in the storage cluster.

In some embodiments, a storage node included in a storage cluster may have a corresponding processor, and a plurality of storage tiers. A first storage tier may correspond to a storage with faster access times than a second storage tier. In the example shown, a first storage tier corresponds to a solid state drive and a second storage tier corresponds to a hard disk drive.

In some embodiments, a storage node included in a set may include a processor, memory, and a plurality of storage devices. The plurality of storage devices may include one or more solid state drives, one or more hard disk drives, or a combination thereof.

In some embodiments, a storage node included in a storage cluster may include a processor and memory, and may be coupled to a separate storage device. The separate storage device may include one or more storage devices (e.g., flash storage devices). A storage device may be segmented into a plurality of partitions. Each of the storage nodes included in the storage cluster may be allocated one or more of the partitions. The one or more partitions allocated to a storage node may be configured to store data associated with some or all of the plurality of objects that were backed up to the storage cluster that includes the storage node. For example, the separate storage device may be segmented into 10 partitions and the storage cluster may include 10 storage nodes. A storage node of the 10 storage nodes may be allocated one of the 10 partitions.

In some embodiments, a storage node of a storage cluster may include a processor, memory, and a storage device. The storage node may be coupled to a separate storage device. The separate storage device may include one or more storage devices. A storage device may be segmented into a plurality of partitions. Each of the storage nodes associated with the storage cluster may be allocated one or more of the partitions. The one or more partitions allocated to a storage node may be configured to store data associated with some or all of the plurality of objects that were backed up to the storage cluster. For example, the separate storage device may be segmented into 10 partitions and the storage node may include 10 storage nodes. A storage node of the 10 storage nodes may be allocated one of the 10 partitions.

A storage cluster may be a cloud instantiation of a storage cluster. A configuration of the cloud instantiation of a storage cluster may be a virtual replica of the storage cluster. For example, storage cluster 113 may be comprised of three storage nodes, each storage node with a storage capacity of 10 TB. A cloud instantiation of storage cluster 113 may be comprised of three virtual nodes, each virtual node with a storage capacity of 10 TB. In other embodiments, a cloud instantiation of a storage cluster may have more storage capacity than an on-premises instantiation of the storage cluster. In other embodiments, a cloud instantiation of a storage cluster may have less storage capacity than an on-premises instantiation of the storage cluster.

A user associated with source system 102 may provide a data protection specification to data cluster management service 123. The data protection specification may register source system 102 with data cluster management system 123 and identify a plurality of objects associated with the source system 102 that are to be protected (e.g., objects 101a, 101b, ..., 101n). An object may be a file, a database, a virtual machine, a container, an application, etc. Although FIG. 1 depicts three objects, source system 102 may include n objects. In some embodiments, the plurality of objects have one or more common attributes. In some embodiments, a first subset of the plurality of objects have a first set of one or more common attributes, a second subset of the plurality of objects have a second set of one or more common attributes, ..., and an nth subset of the plurality of objects have an nth set of one or more common attributes.

In response to the data protection specification, data cluster management service 123 may determine one or more groups for the plurality of objects associated with source system 102. In some embodiments, the plurality of objects associated with source system 102 may be grouped into a single group based on one or more common attributes. For example, the plurality of objects may all be the same type of object (e.g., virtual machine). In some embodiments, the plurality of objects associated with source system 102 may be grouped into a plurality of different groups based on one or more common attributes. For example, the plurality of objects associated with source system 102 may be grouped into a first group that includes emails associated with a first department (e.g., engineering) of an entity associated with source system 102, a second group that includes emails associated with a second department (e.g., sales) of the entity associated with source system 102, ..., and an nth group that includes emails associated with an nth department (e.g., marketing) of the entity associated with source system 102.

In some embodiments, data cluster management service 123 may implement one or more models (e.g., a machine learning model, a rules-based model, a heuristic model, etc.) to determine the one or more groups for the plurality of objects associated with source system 102. The machine learning model may be trained using a supervised machine learning algorithm. For example, the supervised machine learning algorithm may be a linear regression algorithm, a logistical regression algorithm, a random forest algorithm, a gradient boosted trees algorithm, a support vector machines algorithm, a neural networks algorithm, a decision tree algorithm, a Naive Bayes algorithm, a nearest neighbor algorithm, or any other type of supervised machine learning algorithm. In some embodiments, the machine learning model is trained using a semi-supervised machine learning algorithm that utilizes one or more labeled data sets and one or more pseudo-labeled data sets. In some embodiments, the machine learning model is trained using a reinforcement machine learning algorithm. For example, the reinforcement machine learning algorithm may be a Q-Learning algorithm, a temporal difference algorithm, a Monte-Carlo tree search algorithm, an asynchronous actor-critic agent's algorithm, or any other type of reinforcement machine learning algorithm. In some embodiments, the machine learning model is trained using an unsupervised machine learning algorithm. For example, clustering methods, anomaly detection, neural network, etc.

Data cluster management service 123 may dynamically select a storage distribution mode for a group of objects based on one or more optimization criteria. The one or more optimization criteria may include one or more of the following: an expected deduplication efficiency, a predicted deduplication efficiency, a target deduplication ratio, a retention policy, an RTO, an RPO, a cluster type, a tag, a cluster performance metric (e.g., CPU utilization, storage space available, storage space used), a parallel restoration requirement, etc. In some embodiments, data cluster management service 123 may implement one or more models (e.g., a machine learning model, a rules-based model, a heuristic model, etc.) to dynamically select the storage distribution mode for the group of objects.

In some embodiments, data cluster management service 123 may dynamically select the storage distribution mode for the group of objects to be a deduplication distribution mode. In the deduplication distribution mode, the objects included in the group may be stored at a single cluster. For example, a first object included in the group may be stored at storage cluster 113, a second object included in the group may be stored at storage cluster 113, ..., and a nth object included in the group may be stored at storage cluster 113. Deduplication distribution mode may be selected when the deduplication ratio for objects included in the group is expected to meet or exceed a particular deduplication ratio threshold. A machine learning model may predict which storage cluster of the plurality of storage clusters 113, 115, ..., 117 will provide the best deduplication for the group of objects included in the group and data cluster management service 123 may select the predicted storage cluster that will provide the best deduplication.

In some embodiments, data cluster management service 123 may dynamically select the storage distribution mode for the group of objects to be a restore distribution mode. In the restore distribution mode, the objects included in the group are stored across a plurality of different clusters. For example, a first object included in the group may be stored at storage cluster 113, a second object included in the group may be stored at storage cluster 115, ..., and a nth object included in the group may be stored in at storage cluster 117. A single storage cluster may not be able to achieve the particular RTO because of I/O bandwidth limitations. A restore distribution mode may be selected when a particular RTO is to be satisfied for the plurality of objects included in the group. In some embodiments, all of the storage clusters 113, 115, ..., 117 are utilized for the restore distribution mode. In some embodiments, a subset of the storage clusters 113, 115, ..., 117 are utilized for the restore distribution mode. A machine learning model may be used to select which of the storage clusters 113, 115, ..., 117 to include in the restore distribution mode based on a predicted restore time for the selected storage clusters.

Data cluster management service 123 may cause the storage distribution mode to be implemented by one or more of the plurality of storage clusters 113, 115, ..., 117. For the deduplication distribution mode, data cluster management service 123 may provide to one of the clusters 113, 115, ..., 117 a command to back up the plurality of objects having one or more common attributes included in the group. For the restore distribution mode, data cluster management service 123 may provide to at least two of the plurality of clusters a corresponding command to back up the plurality of objects having one or more common attributes included in the group. For example, data cluster management service 123 may provide to storage cluster 113 a first command to back up a first subset of the plurality of objects included in the group and provide to storage cluster 115 a command to back up a second subset of the plurality of objects included in the group.

In response to receiving the command, a storage cluster may configure itself to back up the plurality of objects having the one or more common attributes included in the group. For example, a storage cluster may request from source system 102 the data associated with the plurality of objects in the group having the one or more common attributes. The storage cluster may request the data associated with the plurality of objects in the group having the one or more common attributes according to a backup schedule (e.g., daily, weekly, etc.). In response to the request, source system 102 can provide the data associated with the requested objects. In some embodiments, the request is provided to source-side component 103 and in response to the request, source-side component 103 may obtain the data associated with the requested objects from a storage associated with source system 102 and provide the obtained data to a requesting storage cluster. In some embodiments, source-side component 103 is optional and a processor associated with source system 102 is configured to obtain the data associated with the requested objects from a storage associated with source system 102 and provide the obtained data to a requesting storage cluster.

The storage cluster may store the data associated with the requested objects and provide data cluster management service 123 a notification that indicates a storage location for the plurality of objects included in the group stored by the storage cluster. In response to receiving the notification, data cluster management service 123 can then update a map that indicates a storage location for the plurality of objects associated with source system 102.

In some embodiments, data cluster management service 123 may monitor a storage cluster and determine a deduplication ratio for an object associated with a deduplication distribution mode. Data cluster management service 123 may determine that the deduplication ratio is less than a deduplication ratio threshold and select a different storage cluster to back up the object associated with the deduplication distribution mode.

In some embodiments, data cluster management service 123 may monitor a first storage cluster and determine whether a storage capacity associated with the first storage cluster has reached a storage threshold. In response to a determination that the storage threshold has been reached, data cluster management service 123 may determine from a plurality of available storage clusters a second storage cluster having a storage capacity that has not reached the storage threshold by a threshold amount. A storage cluster may be an available storage cluster in the event a storage capacity associated with the storage cluster is less than the storage threshold by a threshold amount. Data cluster management service 123 may cause the second storage cluster to implement the storage distribution mode implemented by the first storage cluster that has reached the storage threshold. For example, the first storage cluster that has reached the storage threshold may be implementing a deduplication distribution mode and data cluster management service 123 may cause the second storage cluster to implement the deduplication distribution mode. Alternatively, the first storage cluster that has reached the storage threshold may be implementing a restore distribution mode and data cluster management service 123 may cause the second storage cluster to implement the restore distribution mode.

In some embodiments, data cluster management service 123 may monitor an amount of data stored by a storage cluster and to determine whether the amount of data stored by the storage cluster has reached a storage threshold. In response to a determination that the amount of data stored by the storage cluster has reach the storage threshold, data cluster management service 123 may determine from a plurality of available storage clusters a different storage cluster having an amount of storage used that has not reached the storage threshold by a threshold amount. A storage cluster may be an available storage cluster in the event an amount of storage used by the storage cluster is less than the storage threshold by a threshold amount. Data cluster management service 123 may cause the different storage cluster to implement the storage distribution mode implemented by the storage cluster that has reached the storage threshold. For example, the storage cluster that has reached the storage threshold may be implementing a deduplication distribution mode and data cluster management service 123 may cause the different storage cluster to implement the deduplication distribution mode for the group of object(s) having the one or more common attributes. Alternatively, the storage cluster that has reached the storage threshold may be implementing a restore distribution mode and data cluster management service 123 may cause the different storage cluster to implement the restore distribution mode for the group of object(s) having the one or more common attributes.

In some embodiments, data cluster management service 123 may selectively switch a storage cluster between a deduplication distribution mode and a restore distribution mode. In some embodiments, a storage cluster switches from the deduplication distribution mode to the restore distribution mode. Data cluster management service 123 may monitor a deduplication ratio associated with a storage cluster that is in a deduplication distribution mode. Data cluster management service 123 may determine whether the deduplication ratio associated with the storage cluster is greater than a threshold deduplication ratio by a threshold amount. In response to a determination that the deduplication ratio associated with the storage cluster is greater than the threshold deduplication ratio by the threshold amount, data cluster management service 123 may configure the storage cluster to switch from the deduplication distribution mode to the restore distribution mode by configuring the storage cluster to back up one or more objects having a second set of one or more attributes. One or more other storage clusters may be configured to back up the one or more objects having the second set of one or more attributes (either in restore distribution mode or deduplication distribution mode).

Switching from the deduplication distribution mode to the restore distribution mode may enable a particular deduplication ratio to be maintained at the storage cluster while reducing the amount of time needed to restore to source system a plurality of objects having the second set of attributes because the one or more other storage clusters in combination with the storage cluster may restore, in parallel, the objects having the second set of attributes. In some embodiments, the data cluster management service may configure one or more other storage clusters in a restore distribution mode to back up objects having the first set of one or more attributes. This may reduce the amount of time needed to restore to source system 102 a plurality of objects having the first set of attributes because the one or more other storage clusters in combination with the storage cluster may restore, in parallel, the objects having the first set of attributes. In some embodiments, data cluster management service 123 may determine to maintain the storage cluster in the deduplication distribution mode in response to a determination that the deduplication ratio associated with the storage cluster is not greater than the threshold deduplication ratio by the threshold amount. In some embodiments, data cluster management service 123 may determine to revert the storage cluster back from the restore distribution mode to the deduplication distribution mode in response to a determination that the deduplication ratio associated with the storage cluster is not greater than the threshold deduplication ratio by the threshold amount.

Data cluster management service 123 may monitor a deduplication ratio associated with a storage cluster that is in restore distribution mode. Data cluster management service 123 may determine whether the deduplication ratio associated with the storage cluster is less than a threshold deduplication ratio by a threshold amount. In response to a determination that the deduplication ratio associated with the storage cluster is less than the threshold deduplication ratio by the threshold amount, data cluster management service 123 may configure the storage cluster to switch from the restore distribution mode to a deduplication distribution mode. This may postpone the need to add additional storage for the source system because the usage rate for storage space of the storage cluster is reduced since more data associated with source system is likely to be deduplicated by the storage cluster. Data cluster management service 123 may configure the storage cluster to back up from source system 102 one or more objects having one or more common attributes. In some embodiments, the one or more objects having one or more common attributes may be a subset of objects stored by the storage cluster. In some embodiments, the one or more objects having one or more common attributes may not be currently stored by the storage cluster. In some embodiments, data cluster management service 123 may determine to maintain the storage cluster in the restore distribution mode in response to a determination that the deduplication ratio associated with the storage cluster is not less than the threshold deduplication ratio by the threshold amount. In some embodiments, data cluster management service 123 may determine to revert the storage cluster back from the deduplication distribution mode to the restore distribution mode in response to a determination that the deduplication ratio associated with the storage cluster is not less than the threshold deduplication ratio by the threshold amount.

In some embodiments, data cluster management service 123 may receive a request to restore a plurality of objects having one or more common attributes to a target destination. Data cluster management service 123 may identify one or more storage clusters storing the plurality of objects having the one or more common attributes by utilizing a map that stores the storage location for a plurality of objects associated with source system 102. Data cluster management service 123 may provide to the one or more identified storage clusters a command to restore the plurality of objects having one or more common attributes to the target destination. In some embodiments, the plurality of objects having one or more common attributes may be restored from a single storage cluster. In some embodiments, the plurality of objects having one or more common attributes may be restored, in parallel, from a plurality of storage clusters.

It will be appreciated from the foregoing that data cluster management 123 is configured so as to perform the actions set out above. Data cluster management service 123may be coupled to source-side component 103 via connection 130. Connections 130 may be a wired or wireless connection. Connection 130 may be a LAN, a SAN, a WAN, a WLAN, a CAN, the Internet, an intranet, a VPN, a MAN, a PAN, and/or a combination thereof.

In some embodiments, data cluster management server 123 may provide to source-side component 103 via connection 130 a command for distributing objects 101a, 101b, ..., 101n to storage clusters 113, 115, ..., 117. The command may indicate to which storage cluster source-side component is to provide the data associated with an object (e.g., object content data, object metadata). In some embodiments, the command may indicate that a group of objects having one or more common attributes are to be backed up to a storage cluster (e.g., storage cluster 113). In some embodiments, the command may indicate that a group of a plurality of objects having one or more common attributes are to be backed up across the storage clusters 113, 115, ..., 117 (e.g., across at least two of the storage clusters). For example, the command may indicate that a first subset of the plurality of objects having the one or more common attributes are to be backed up to storage cluster 113, a second subset of the plurality of objects having the one or more common attributes are to be backed up to storage cluster 115, ..., and an nth subset of the plurality of objects having the one or more common attributes are to be backed up to storage cluster 117. In response to receiving the command, source-side component 103 may provide the data associated with the objects having one or more common attributes to the storage cluster(s) indicated by the command.

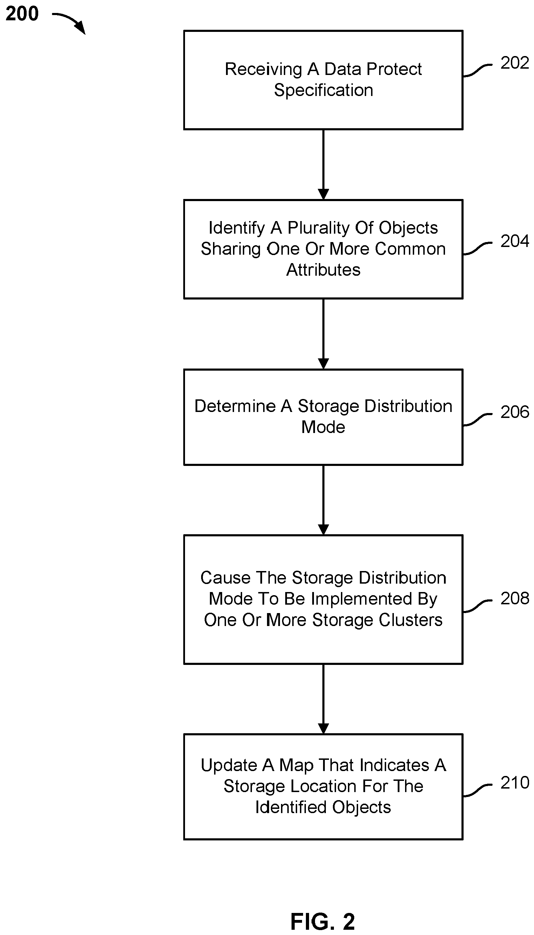

FIG. 2 is a flow diagram illustrating an embodiment of a process for distributing objects across deduplication domains based on a storage distribution mode in accordance with some embodiments. In the example shown, process 200 may be implemented by a data cluster management service, such as data cluster management service 123.

At 202, a data protection specification is received. The data protection specification may register the source system with the data cluster management system and identify a plurality of objects associated with the source system that are to be protected.

At 204, a plurality of objects sharing one or more common attributes are identified. The one or more common attributes may include a source system, a type of object, a size of an object, an application (e.g., Office 365, SQL) associated with an object, a retention policy associated with an object, a creation date associated with an object, a tag associated with an object, a permissions group associated with an object, an RTO associated with an object, a label associated with an object, a prefix associated with an object, an author associated with an object, a geolocation associated with an object, a creator associated with an object, etc.

At 206, a storage distribution mode for the plurality of objects is determined based one or more optimization criteria. In some embodiments, the data cluster management service may group the plurality of objects into a single group based on the one or more common attributes. In some embodiments, the data cluster management service may group the plurality of objects into a plurality of groups based on the one or more common attributes.

The data cluster management service may dynamically select a storage distribution mode for a group of objects having one or more common attributes based on one or more optimization criteria. The one or more optimization criteria may include one or more of the following: an expected deduplication efficiency, a predicted deduplication efficiency, a target deduplication ratio, a retention policy, an RTO, an RPO, a cluster type, a cluster performance metric (e.g., CPU utilization, storage space available, storage space used), a tag, a parallel restoration requirement, etc.

At 208, the storage distribution mode is caused to be implemented by one or more of a plurality of storage clusters. In some embodiments, the data cluster management service may dynamically select the storage distribution mode for the group of objects to be a deduplication mode. In the deduplication mode, the objects included in the group are stored at a single cluster. For example, a first object included in the group is stored at a first cluster, a second object included in the group is stored at the first cluster, ... , and a nth object included in the group is stored at the first cluster. Deduplication mode may be selected when the deduplication ratio for objects included in the group is expected to meet or exceed a deduplication ratio threshold.

In some embodiments, the data cluster management service may dynamically select the storage distribution mode for the group of objects to be a restore mode. In the restore mode, the objects included in the group are stored across a plurality of different clusters. For example, a first object included in the group may be stored in a first cluster, a second object included in the group may be stored in a second cluster, ..., and a nth object included in the group may be stored in an nth cluster. A single storage cluster may not be able to achieve the particular RTO because of I/O bandwidth limitations. Restore mode may be selected when a particular RTO is to be satisfied for the plurality of objects included in the group.

The data cluster management service may cause the storage distribution mode to be implemented by one or more of the plurality of storage clusters. In some embodiments, for the deduplication mode, the data cluster management service may provide to one of the clusters a command to back up the plurality of objects included in the group. For the restore mode, the data cluster management service may provide to at least two of the plurality of clusters a corresponding command to back up the plurality of objects included in the group. For example, the data cluster management service may provide to a first storage cluster a first command to back up a first subset of the plurality of objects included in the group and provide to a second storage cluster a command to back up a second subset of the plurality of objects included in the group. In response to receiving the command, a storage cluster may configure itself to back up the plurality of objects included in the group. A storage cluster may be configured to request from the source system the data associated with the plurality of objects in the group having the one or more common attributes. The storage cluster may be configured to request the data associated with the plurality of objects in the group having the one or more common attributes according to a backup schedule (e.g., daily, weekly, etc.). In response to the request, the source system may provide the data associated with the requested objects.

In some embodiments, for deduplication mode, the data cluster management service may provide to a source-side component associated with a source system a command to back up the plurality of objects included in the group. In response to receiving the command, the source-side component associated with the source system may back up plurality of objects included in the group to one of the storage clusters. For restore mode, the data cluster management service may provide to a source-side component associated with a source system a command to backup the plurality of objects included in the group. In response to receiving the command, the source-side component associated with the source system may back up a first subset of the plurality of objects included in the group to a first storage cluster and one or more other subsets of the plurality of objects included in the group to one or more other storage clusters.

At 210, a map that indicates a storage location for the identified objects is updated. A storage cluster may store the data associated with the requested objects and may provide the data cluster management service a notification that indicates a storage location for the plurality of objects included in the group stored by the storage cluster. In response to receiving the notification, the data cluster management service may update a map that indicates a storage location for the plurality of objects associated with the source system.

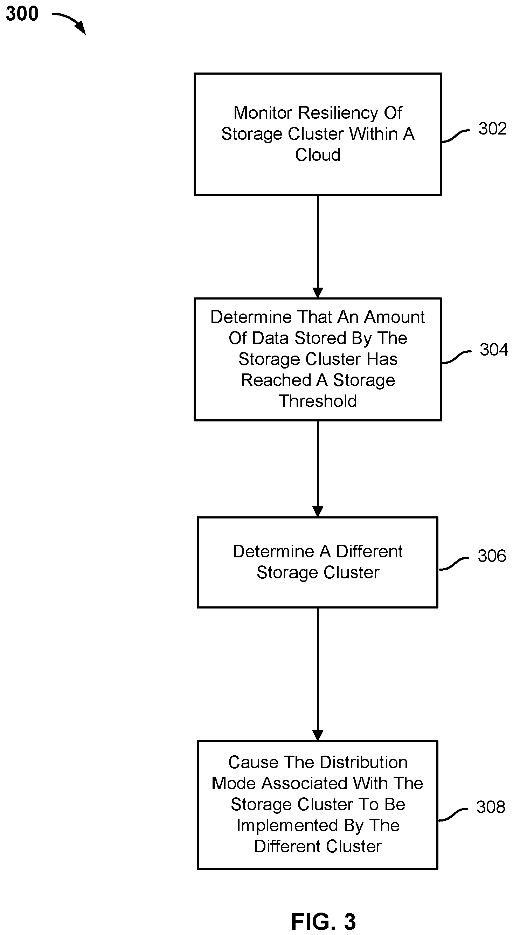

FIG. 3 is a flow diagram illustrating an embodiment of a process for causing a storage distribution mode to be implemented in accordance with some embodiments. In the example shown, process 300 may be implemented by a data cluster management service, such as data cluster management service 123. In some embodiments, process 300 may be implemented to perform some of step 208 of process 200.

At 302, a resiliency of a storage cluster within a cloud is monitored to improve resiliency within the cloud. An amount of data stored by a storage cluster may be monitored and compared to a storage threshold. The amount of data stored by the storage cluster increases over time as the storage cluster backs up object(s) associated with a source system. In some embodiments, the storage cluster may be configured to implement a deduplication distribution mode for a group of objects (e.g., all of the objects included in the group are backed up to the storage cluster). In some embodiments, the storage cluster may be configured to implement a restore distribution mode for a group of objects (e.g., some of the objects included in the group are backed up to the storage cluster).

At 304, it is determined that the amount of data stored by the storage cluster has reached the storage threshold. In some embodiments, a user associated with source system may establish the storage threshold. The user associated with the source system may establish the storage threshold via a cloud service system, such as cloud service system 122. The cloud service system may include a portal that enables the user to control the storage cluster. In some embodiments, the storage threshold may be a predetermined storage threshold (e.g., 90% of storage used). The storage threshold may be established by the cloud service system.

At 306, a different storage cluster among a plurality of available storage clusters is determined. A storage cluster may be an available storage cluster in the event an amount of storage used by the storage cluster is less than the storage threshold by a threshold amount. In some embodiments, the different storage cluster may be a new storage cluster. In some embodiments, the different storage cluster may be an existing storage cluster.

At 308, the distribution mode associated with the storage cluster is caused to be implemented by the different storage cluster. This improves resiliency within the cloud because the storage of objects may not be overly reliant on a single storage cluster. In some embodiments, the storage cluster may be implementing a deduplication distribution mode and the data cluster management service may provide to the different storage cluster a command to back up objects included in the group that have one or more common attributes. In deduplication distribution mode, the different storage cluster may be the only active storage cluster backing up objects included in the group that have the one or more common attributes.

In some embodiments, the storage cluster may be implementing a restore distribution mode and the data cluster management service may provide to the different storage cluster a command to back up objects included in the group that have one or more common attributes. In restore distribution mode, the different storage cluster may be one of many storage clusters backing up objects included in the group that have the one or more common attributes.

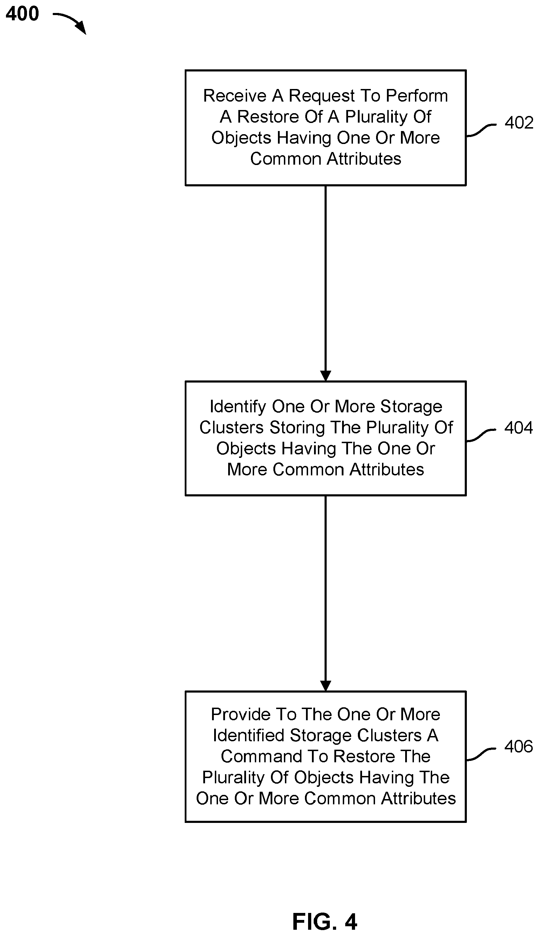

FIG. 4 is a flow diagram illustrating an embodiment of a process for restoring a plurality of objects having one or more common attributes in accordance with some embodiments. In the example shown, process 400 may be implemented by a data cluster management service, such as data cluster management service 123.

At 402, a request to restore a plurality of objects having one or more attributes is received. For example, the request may be for emails associated with a sales department.

At 404, the one or more storage clusters storing the plurality of objects having the one or more common attributes are identified. The data cluster management service may utilize a map that indicates a corresponding storage location for the plurality of objects having the one or more attributes (e.g., the map updated at step 210 of process 200). In some embodiments, the map may indicate that the plurality of objects are stored at a single storage cluster. In some embodiments, the map may indicate that the plurality of objects are stored across a plurality of storage clusters.

At 406, a command to restore the plurality of objects having the one or more common attributes is provided to the one or more identified storage clusters. In some embodiments, the command to restore the plurality of objects having the one or more common attributes may be provided to a single storage cluster storing the plurality of objects having the one or more common attributes. In some embodiments, the command to restore the plurality of objects having the one or more common attributes may be provided to a plurality of storage clusters storing the plurality of objects having the one or more common attributes.

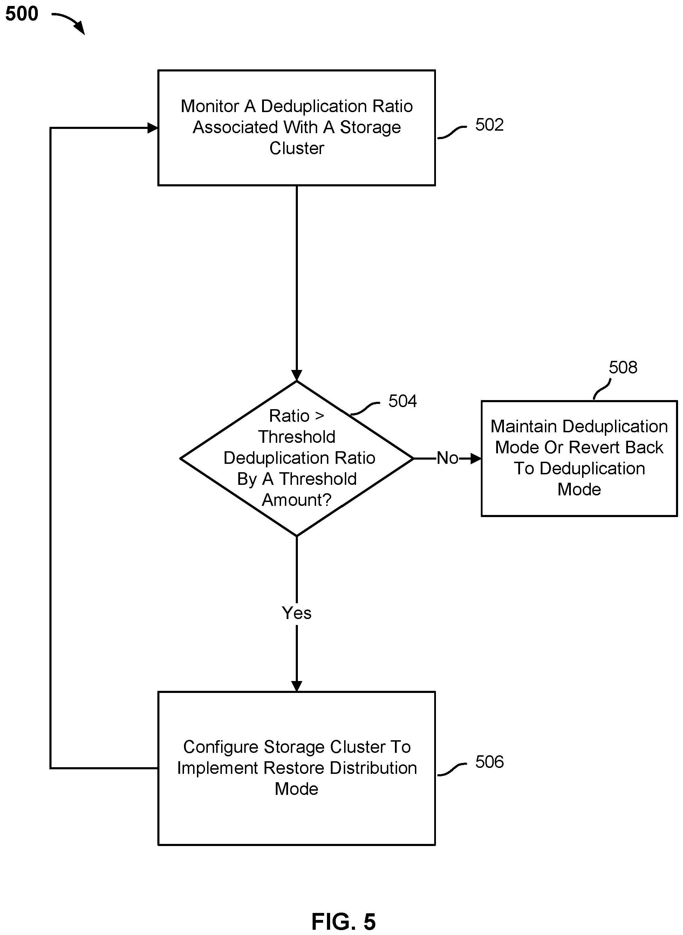

FIG. 5 is a flow diagram illustrating an embodiment of a process for dynamically switching between a deduplication distribution mode and a restore distribution mode in accordance with some embodiments. In the example shown, process 500 may be implemented by a data cluster management service, such as data cluster management service 123. In some embodiments, process 500 may be implemented to perform some of steps 206 and 208 of process 200.

At 502, a deduplication ratio associated with a storage cluster is monitored. The deduplication ratio may be a measurement of the data's original size versus the data's size after removing redundancy.

At 504, it is determined whether the deduplication ratio is greater than a threshold deduplication ratio by a threshold amount. In response to a determination that the deduplication ratio is greater than the threshold deduplication ratio by the threshold amount, process 500 may proceed to 506. In response to a determination that the deduplication ratio is not greater than the threshold deduplication ratio by the threshold amount, process 500 may proceed to 508.

At 506, the storage cluster is configured to implement a restore distribution mode. The data cluster management service may provide to the storage cluster a command to switch from a deduplication distribution mode to the restore distribution mode. The command may indicate one or more objects having a second set of one or more attributes that are different than the objects having a first set of one or more attributes currently stored by the storage cluster are to be backed up to the storage cluster. In response, the storage cluster may be configured to request from a source system data associated with the one or more objects having the second set of one or more attributes. The one or more objects having the second set of one or more attributes may be backed up by one or more other storage clusters. The data cluster management service may configure one or more other storage clusters implementing a restore distribution mode to back up the one or more objects having the first set of one or more attributes.

At 508, the storage distribution mode of the storage cluster is maintained in the deduplication distribution mode is maintained or reverted from the restore distribution mode back to the deduplication distribution mode.

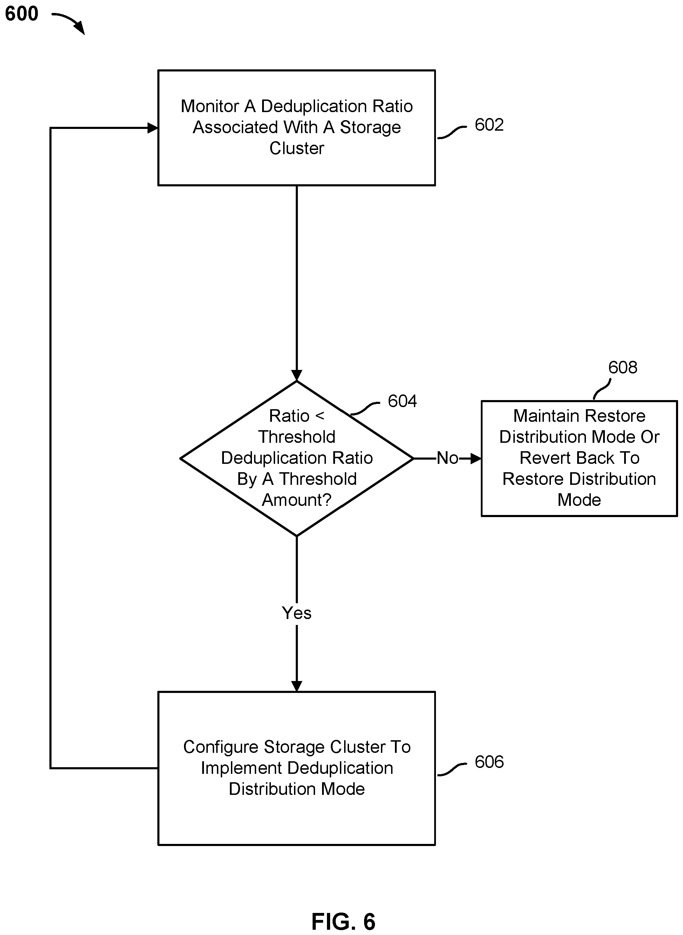

FIG. 6 is a flow diagram illustrating an embodiment of a process for dynamically switching between a restore distribution mode and a deduplication distribution mode in accordance with some embodiments. In the example shown, process 600 may be implemented by a data cluster management service, such as data cluster management service 123. In some embodiments, process 600 may be implemented to perform some of steps 206 and 208 of process 200.

At 602, a deduplication ratio associated with a storage cluster is monitored.

At 604, it is determined whether the deduplication ratio is less than a threshold deduplication ratio by a threshold amount. In response to a determination that the deduplication ratio is less than the threshold deduplication ratio by the threshold amount, process 600 may proceed to 606. In response to a determination that the deduplication ratio is not less than the threshold deduplication ratio by the threshold amount, process 600 may proceed to 608.

At 606, the storage cluster is configured to implement a deduplication distribution mode. The data cluster management service may provide to the storage cluster a command to switch from a restore distribution mode to the deduplication distribution mode. The command may indicate one or more objects having one or more common attributes that are to be backed up from a source system. In some embodiments, the one or more objects having one or more common attributes may be a subset of objects stored by the storage cluster. In some embodiments, the one or more objects having one or more common attributes may not be currently stored by the storage cluster. In response, the storage cluster may be configured to request from a source system data associated with the one or more other objects having the one or more common attributes.

At 608, the storage distribution mode of the storage cluster is maintained in the restore distribution mode or reverted from the deduplication distribution mode back to the restore distribution mode.

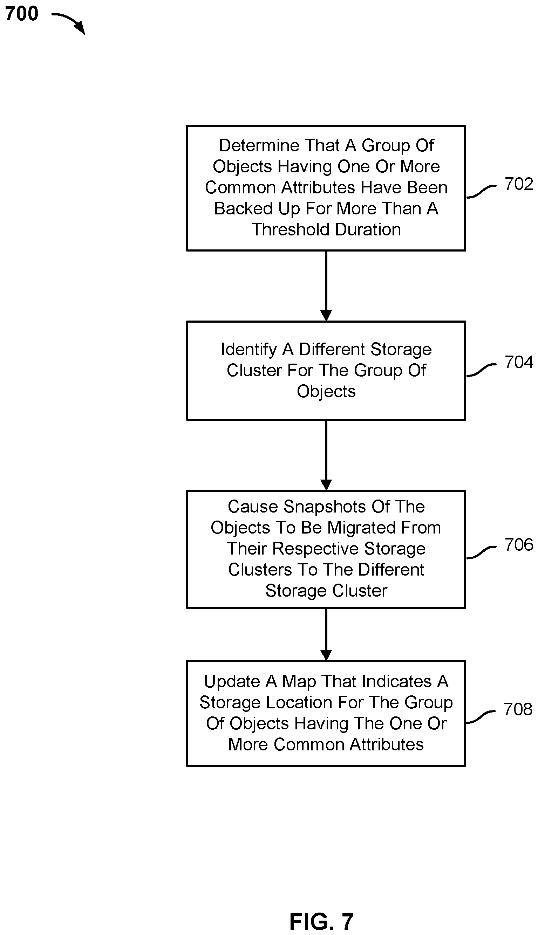

FIG. 7 is a flow diagram illustrating an embodiment of a process for dynamically switching between a restore distribution mode and a deduplication distribution mode in accordance with some embodiments. In the example shown, process 600 may be implemented by a data cluster management service, such as data cluster management service 123. In some embodiments, process 600 may implemented to perform some of steps 206 and 208 of process 200.

At 702, it is determined that a group of objects having one or more common attributes have been backed up for more than a threshold duration. For example, the threshold duration may be one month. An initial storage distribution mode for the group of objects having one or more common attributes may be a restore distribution mode. The objects included in the group may have been backed up across a plurality of storage clusters. Configuring the group of objects to be in the restore distribution mode enables a fast restore of the group of objects in the event they need to be restored to a destination system because they are being restored in parallel by a plurality of cluster systems instead of a single cluster system. A single cluster system may be I/O bandwidth limited.

At 704, a different storage cluster is identified.

At 706, snapshots of the group of objects having one or more common attributes are caused to be migrated from their respective storage clusters to the different storage cluster. A data cluster management service may provide each of the storage clusters storing at least one object included in the group of objects having one or more common attributes a corresponding command to migrate the snapshots of at least one object included in the group of objects having one or more common attributes to the different storage cluster. When stored at the different storage cluster, the group of objects having one or more common attributes can be stored in a deduplication distribution mode.

At 708, a map that indicates a storage location for the group of objects having the one or more common attributes identified objects is updated. The different storage cluster may store the data associated with the group of objects having the one or more common attributes and may provide the data cluster management service a notification that indicates a storage location for the plurality of objects included in the group. In response to receiving the notification, the data cluster management service may update a map that indicates a storage location for the plurality of objects associated with the source system. For example, the storage location for objects 01, 02, and O3 may be updated from storage clusters SC1, SC2, and SC3, respectively to storage cluster SC100.

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Although the foregoing embodiments have been described in some detail for purposes of clarity of understanding, the invention is not limited to the details provided. There are many alternative ways of implementing the invention. The disclosed embodiments are illustrative and not restrictive.

Aspects of the present invention are provided with reference to the following clauses:
Clause 1: A method, comprising: identifying a plurality of objects sharing one or more common attributes; determining a storage distribution mode for the identified objects sharing the one or more common attributes based at least in part on one or more optimization criteria; and causing the storage distribution mode to be implemented by one or more of a plurality of storage clusters.
Clause 2. The method of clause 1, further comprising receiving a data protect specification.
Clause 3. The method of clause 2, wherein the data protection specification identifies a set of objects associated with a source system that are to be protected.
Clause 4. The method of clause 3, further comprising determining one or more groups for the set of objects associated with the source system.
Clause 5. The method of clause 4, wherein the one or more groups are associated with a corresponding set of one or more common attributes.
Clause 6. The method of clause 1, wherein the one or more optimization criteria is based on one or more of the following: an expected deduplication efficiency, a predicted deduplication efficiency, a target deduplication ratio, a retention policy, a recovery time objective, a recovery point objective, a cluster type, a cluster performance metric, a tag, or a parallel restoration requirement.
Clause 7. The method of clause 1, wherein the storage distribution mode for the identified objects sharing the one or more common attributes is determined using one or more machine learning models.
Clause 8. The method of clause 1, wherein the determined storage distribution mode is a deduplication distribution mode.
Clause 9. The method of clause 8, wherein the deduplication distribution mode is selected for the identified objects sharing the one or more common attributes in response to a determination that the identified objects sharing the one or more common attributes are expected to have an expected deduplication ratio that is above a particular deduplication ratio threshold.
Clause 10. The method of clause 8, wherein causing the storage distribution mode to be implemented by the one or more of the plurality of storage clusters includes providing to a first storage cluster a command to back up the identified objects sharing the one or more common attributes.
Clause 11. The method of clause 10, wherein in response to receiving the command to back up the identified objects sharing the one or more common attributes, the first storage cluster requests data associated with the identified objects sharing the one or more common attributes from a source system.
Clause 12. The method of clause 11, wherein the first storage cluster receives and stores the data associated with the identified objects sharing the one or more common attributes from the source system.
Clause 13. The method of clause 1, wherein the determined storage distribution mode is a restore distribution mode.
Clause 14. The method of clause 13, wherein the restore distribution mode is selected for the identified objects sharing the one or more common attributes in response to a determination that a particular recovery time objective is to be satisfied for the identified objects sharing the one or more common attributes.
Clause 15. The method of clause 13, wherein causing the storage distribution mode to be implemented by the one or more of the plurality of storage clusters includes providing to the plurality of storage clusters corresponding commands to back up the identified objects sharing the one or more common attributes.
Clause 16. The method of clause 15, wherein in response to receiving the corresponding commands to back up the identified objects sharing the one or more common attributes, the plurality of storage clusters request data associated with the identified objects sharing the one or more common attributes from a source system.
Clause 17. The method of clause 16, wherein the plurality of storage clusters receive and store the data associated with the identified objects sharing the one or more common attributes from the source system.
Clause 18. The method of clause 1, further comprising updating a map that indicates a storage location for the identified objects sharing the one or more common attributes.
Clause 19. A computer program product embodied in a non-transitory computer readable medium and comprising computer instructions for:
   identifying a plurality of objects sharing one or more common attributes;
   determining a storage distribution mode for the identified objects sharing the one or more common attributes based at least in part on one or more optimization criteria; and
   causing the storage distribution mode to be implemented by one or more of a plurality of storage clusters.
Clause 20. A system, comprising:
   a processor configured to:
      identify a plurality of objects sharing one or more common attributes;
      determine a storage distribution mode for the identified objects sharing the one or more common attributes based at least in part on one or more optimization criteria; and
      cause the storage distribution mode to be implemented by one or more of a plurality of storage clusters; and
   a memory coupled to the processor and configured to provide the processor with instructions.

## Claims

1. A method, comprising:
identifying a plurality of data objects sharing one or more data attributes;
determining a storage distribution mode for the identified plurality of data objects based at least in part on one or more optimization criteria; and
causing one or more of a plurality of storage clusters to store the identified plurality of data objects according to the determined storage distribution mode, wherein, depending on the storage distribution mode that is determined, the identified plurality of data objects are stored at one of: i) one storage cluster of the plurality of storage clusters and ii) two or more storage clusters of the plurality of storage clusters.

2. The method of any preceding claim, wherein the one or more optimization criteria is based on one or more of the following: an expected deduplication efficiency, a predicted deduplication efficiency, a target deduplication ratio, a retention policy, a recovery time objective, a recovery point objective, a cluster type, a cluster performance metric, a tag, and a parallel restoration requirement.

3. The method of any preceding claim, wherein the storage distribution mode for the identified data objects is determined using one or more of: a machine learning model, a rules-based model, and a heuristic model.

4. The method of any preceding claim, wherein the determined storage distribution mode is a deduplication distribution mode, wherein, in the deduplication distribution mode, the identified plurality of data objects are stored at the one storage cluster of the plurality of storage clusters.

5. The method of claim 4, wherein the deduplication distribution mode is selected for the identified plurality of data objects in response to a determination that the identified plurality of data objects are expected to have an expected deduplication ratio that is above a particular deduplication ratio threshold.

6. The method of claim 4 or claim 5, wherein, when the determined storage distribution mode is the deduplication distribution mode, the step of causing the one or more of the plurality of storage clusters to store the identified plurality of data objects according to the determined storage distribution mode comprises:
providing, to the one storage cluster of the plurality of storage clusters, a command to back up the identified plurality of data objects; and
in response to receiving the command to back up the identified plurality of data objects, requesting, by the one storage cluster, data associated with the identified plurality of data objects from a primary system.

7. The method of claim 6, wherein the one storage cluster receives and stores the data associated with the identified plurality of data objects from the primary system.

8. The method of any of claims 1 to 5, wherein the determined storage distribution mode is a restore distribution mode, wherein, in the restore distribution mode, the identified plurality of data objects are stored across the two or more storage clusters of the plurality of storage clusters.

9. The method of claim 8, wherein the restore distribution mode is selected for the identified plurality of data objects in response to a determination that a particular recovery time objective is to be satisfied for the identified plurality of objects.

10. The method of claim 8 or claim 9, wherein, when the determined storage distribution mode is the restore distribution mode, the step of causing the one or more of the plurality of storage clusters to store the identified plurality of data objects according to the determined storage distribution mode comprises:
providing, to the two or more storage clusters, corresponding commands to back up the identified plurality of data objects; and
in response to receiving the corresponding commands to back up the identified plurality of data objects, requesting, by the two or more storage clusters, data associated with the identified plurality of data objects from a primary system.

11. The method of claim 10, wherein the two or more storage clusters receive and store the data associated with the identified plurality of data objects from the primary system.

12. The method of any preceding claim, further comprising updating a map that indicates a storage location for the identified plurality of data objects.

13. The method of any preceding claim, further comprising:
receiving a request to restore the identified plurality of data objects;
identifying the one or more of the plurality of storage clusters storing the identified plurality of data objects; and
providing a command to restore the identified plurality of data objects to the one or more of the plurality of storage clusters.

14. A computer program product embodied in a non-transitory computer readable medium and comprising computer instructions that, when executed by one or more processors, cause the one or more processors to perform the method of any of claims 1 to 13.

15. A system, comprising:
one or more processors; and
a memory coupled to the processor and storing instructions that, when executed by the one or more processors, cause the system to perform the method of any of claims 1 to 13.
